# EUROPÄISCHE PATENTSCHRIFT

(11) **EP 3 432 330 B1**
(45) Veröffentlichungstag und Bekanntmachung des Hinweises auf die Patenterteilung: **20.11.2019**
(21) Anmeldenummer: 18181904.6
(22) Anmeldetag: 05.07.2018
(51) Int. Cl.: H01G 9/10, H01G 9/08, H01G 4/236, H01G 4/224, H01G 4/32

(54) **DECKELVERSCHLUSS FÜR IN EINEM BECHER ANORDENBARE WICKELKONDENSATOREN**
LID-CLOSURE FOR WOUND CAPACITORS IN A CONTAINER
VERROUILLAGE DE COUVERCLE POUR CONDENSATEURS BOBINÉS POUVANT ÊTRE DISPOSÉS DANS UN GOBELET

(30) Priorität: 19.07.2017 DE 102017116301; 22.08.2017 DE 102017119209
(43) Veröffentlichungstag der Anmeldung: 23.01.2019
(73) Patentinhaber: Electronicon Kondensatoren GmbH, 07549 Gera (DE)
(72) Erfinder: Geitner, Volker, 07557 Hundhaupten (DE); Grieb, Theo, 84184 Tiefenbach (DE); Hochsattel, Stefan, 07545 Gera (DE); Kissner, Jens, 07580 Linda (DE); Lemm, Sebastian, 06317 Seegebiet Mansfelder Land (DE); Stoike, Marko, 07570 Wünschendorf (DE); Rattei, Udo, 07549 Gera (DE)
(74) Vertreter: Kruspig, Volkmar

(56) Entgegenhaltungen:
- DE-A1- 2 338 522
- DE-A1- 2 624 334
- DE-A1- 3 045 458

## Beschreibung

Die Erfindung geht aus von einem Deckelverschluss für in einem Becher anordenbare Wickelkondensatoren mit mindestens einer elektrischen Anschlussarmatur, diese ausgebildet als isolierte Deckeldurchführung sowie bestehend aus einem tellerförmigen Kunststoffteil, an welchem die Anschlussarmatur befestigt ist gemäß Oberbegriff des Anspruches 1.

Elektrische Kondensatoren, insbesondere Leistungskondensatoren, die in ein gas- und/oder öldicht verschlossenes Gehäuse eingebaut sind, welches montierbare Durchführungen für die Kondensatoranschlüsse aufweist, gehören zum bekannten Stand der Technik. Hier sei beispielsweise verwiesen auf die EP 0 731 476 A1.

Einen Deckelverschluss für Elektrolyt-Becherkondensatoren zeigt beispielsweise die DE 1 808 795 A1.

Dort geht es darum, den Deckelverschluss kriechstromfest gegenüber der Poldurchführung und diese gegen elektrolytische Korrosion schützend auszubilden.

Der Verschluss wird insofern aus einem thermoplastischen Kunststoff napfförmig gestaltet und im Öffnungsrand des Bechers eingebördelt.

Der Napfrand weist nach innen und stützt den Kondensatorwickel stirnseitig gegen die Federkraft der Kondensatoranschlusslasche ab.

Das freie Ende der betreffenden Anschlusslasche ist unter dem Kopf eines Nietes befestigt, welcher fest und dicht im Napfboden sitzt und nach außen ragt und insofern eine Poldurchführung bildet.

Zur besseren Abdichtung gegen den Becherrand kann der Napfboden an seinem Außenrand einen Kragen bilden, so dass ein Dichtungsring unter dem äußeren Bördelrand des Bechers aufgenommen werden kann.

Allen Ausführungsbeispielen des geschilderten Standes der Technik ist gemeinsam, dass der Becherrand um den Napfrand gebogen wird, was bedeutet, dass für den Napf, der Bestandteil des Deckelverschlusses ist, jeweils bezogen auf den Durchmesser der Becher eine maßhaltige Fertigung notwendig ist.

Im Falle von zwei isolierten Poldurchführungen im Deckelverschluss ist zwischen dem Napfboden und dem Deckelrand eine Trennwand vorgesehen, um getrennte Sicherheitsräume zu bilden, welche je eine Anschlussfahne des Kondensatorwickels enthalten. Bei elektrischer Überlastung kann sich keine Elektrolytbrücke bilden.

In Richtung Becher, das heißt ausgehend von der Unterseite des Napfes, ist es gemäß DE 1 808 795 A1 möglich, eine umlaufende Kragung auszubilden, welche eine nach innen gerichtete, eingeformte Umfangsrippe besitzt. Hierdurch soll ein Kondensatorwickel zentriert und geführt und damit im Becher sicher gehalten werden.

Der Einbau unterschiedlicher Wickel, das heißt von Kondensatorwickeln mit unterschiedlichem Durchmesser und/oder unterschiedlicher Höhe, ist gemäß der Ausführungsform wie oben geschildert, nicht möglich.

DE 26 24 334 und DE 94 10 759 zeigen weitere Wickelkondensatoren die in einem Becher mit Deckelverschluss angeordnet sind.

Aus dem Vorgenannten ist es daher Aufgabe der Erfindung, einen weiterentwickelten Deckelverschluss für in einem Becher anordenbare Wickelkondensatoren mit mindestens einer elektrischen Anschlussarmatur anzugeben, welcher zum einen die Montage unterschiedlicher Wickeleinbauten unter Verwendung von vorgefertigten quasi Standarddeckeln ermöglicht, und wobei zum anderen auf einen separaten Verguss verzichtet werden kann.

Der zu schaffende Deckelverschluss soll eine niedrige Eigeninduktivität und große Luft- und Kriechstrecken bei kleinem Bauraum aufweisen und im Übrigen gasdicht ausgeführt werden.

Die Lösung der Aufgabe erfolgt mit einem Deckelverschluss gemäß der Merkmalskombination nach Patentanspruch 1, wobei die Unteransprüche mindestens zweckmäßige Ausgestaltungen und Weiterbildungen umfassen.

Mit Blick auf den Stand der Technik wird insofern von einem Deckelverschluss für in einem Becher anordenbare Wickelkondensatoren ausgegangen, welcher mindestens eine elektrische Anschlussarmatur aufnimmt. Diese ist als isolierte Deckeldurchführung ausgebildet. Weiterhin besteht der Deckelverschluss aus einem tellerförmigen Kunststoffteil, an welchem die Anschlussarmatur befestigt ist.

Erfindungsgemäß erstreckt sich ausgehend vom tellerförmigen Kunststoffteil an dessen Unterseite zunächst ein angeformter Zentrierstift in Richtung Kondensatorwickel.

Dieser Zentrierstift greift in den Wickelkern ein und sichert hierdurch die Lage des Wickels bezogen auf den Kondensatorbecher und selbstverständlich auch hinsichtlich des Deckelverschlusses.

Weiterhin weist die Unterseite des tellerförmigen Kunststoffteiles mehrere flexible, zungenartige, federelastische Eigenschaften aufweisende bogenförmige Elemente auf, welche der toleranzausgleichenden Fixierung des jeweiligen Kondensatorwickels dienen.

Im Montagezustand liegen die Unterseiten der jeweiligen bogenförmigen Elemente an einer der Stirnseiten des betreffenden Kondensatorwickels an, so dass dieser auch bezogen auf die Längsachsenrichtung des Bechers gesichert ist.

Durch die federelastische Eigenschaften aufweisenden bogenförmigen Elemente ist ein höhenmäßiger Ausgleich, insbesondere unter Berücksichtigung von Fertigungstoleranzen, möglich.

Die jeweiligen Zungen bzw. die bogenförmigen Elemente sind segmentartig ausgebildet und verlaufen vom Rand des tellerförmigen Kunststoffteiles in Richtung Zentrierstift, ohne jedoch in Kontakt mit dem Zentrierstift zu gelangen.

Weiterhin sind im tellerförmigen Kunststoffteil Ausnehmungen vorgesehen, die der Aufnahme eines Isolierkörpers für einen Schraubanschluss dienen.

Dieser Isolierkörper wiederum weist Durchbrüche für den eigentlichen Schraubanschluss auf.

Der bzw. die Schraubanschlüsse sind an ihrer Becherseite mit einem elektrischen bandförmigen Leiter, bevorzugt ausgebildet als Schaltschiene, versehen.

Die Oberseite des tellerförmigen Kunststoffteiles trägt einen napfförmigen, aus einem verformbaren Material bestehenden Deckel, welcher einen überstehenden Rand zur Ausbildung einer Bördelverbindung mit der offenen Seite des Bechers bzw. dem oberen Becherrand besitzt.

Dieser napfförmige Deckel besteht bevorzugt aus einer Aluminiumlegierung.

Der erfindungsgemäße Deckelverschluss, bestehend aus dem tellerförmigen Kunststoffteil, dem Isolierkörper nebst Schraubanschluss, den Schaltschienen und dem napfförmigen, aus einem verformbaren Material bestehenden Deckel ist vorfertigbar und kann entsprechend den jeweiligen Varianten des zu verschließenden Bechers mit darin enthaltenen Kondensatorwickeln vorrätig gehalten werden. Die elektrischen Leiter, ausgebildet als Schaltschiene, können dabei so realisiert werden, dass eine übereinander ausgeführte Stapelanordnung mehrerer Wickel in Reihen- oder Parallelschaltung kontaktierbar ist.

In Weiterbildung der Erfindung ist zwischen dem Deckel und der Anschlussarmatur mindestens eine elastische Dichtung vorgesehen, welche aus einem elektrisch isolierenden Material besteht.

Der Isolierkörper weist in Draufsicht die Form einer angenäherten Zahl 8 auf.

Das tellerförmige Kunststoffteil mit seinen Zungen bzw. den bogenförmigen Elementen besteht bevorzugt aus einem glasfaserverstärkten Kunststoffmaterial.

Zur Verbesserung der mechanischen und elektrischen Eigenschaften weist das tellerförmige Kunststoffteil einen zur Ober- und/oder Unterseite vorspringenden, umlaufenden Bund oder Kragen auf.

Die Erfindung soll nachstehend anhand eines Ausführungsbeispieles sowie unter Zuhilfenahme von Figuren näher erläutert werden.

Hierbei zeigen:
- Fig. 1a: eine Draufsicht auf den vorgefertigten Deckelverschluss mit Anschlussarmatur;
- Fig. 1b: eine Schnittdarstellung längs der Linie A-A gemäß Fig. 1a;
- Fig. 1c: eine perspektivische Darstellung des erfindungsgemäßen Deckelverschlusses;
- Fig. 2a: eine Draufsicht auf den Isolierkörper in Form der Zahl 8;
- Fig. 2b: eine Schnittdarstellung längs der Linie A-A nach Fig. 2a;
- Fig. 2c: eine Unteransicht des Isolierkörpers;
- Fig. 2d: eine perspektivische Darstellung des Isolierkörpers noch ohne eingesetzte Schraubanschlüsse; und
- Fig. 2e: eine Schnittdarstellung durch den Isolierkörper längs der Linie B-B nach Fig. 2b.

Der erfindungsgemäße Deckelverschluss für in einem Becher anordenbare Wickelkondensatoren weist mindestens eine, bei den gezeigten Beispielen zwei elektrische Anschlussarmaturen 1 auf. Grundsätzlich kann jedoch die Anzahl der Anschlussarmaturen je nach Anwendungs- und Ausführungsform erhöht werden.

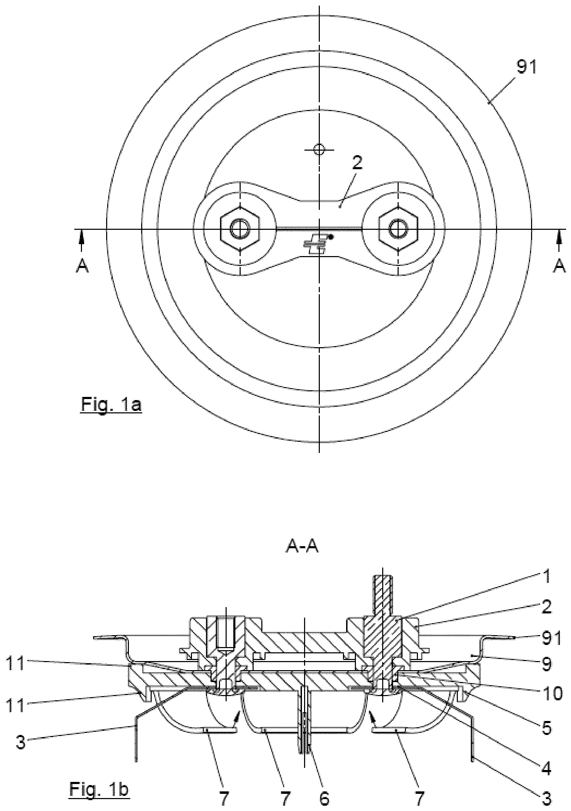

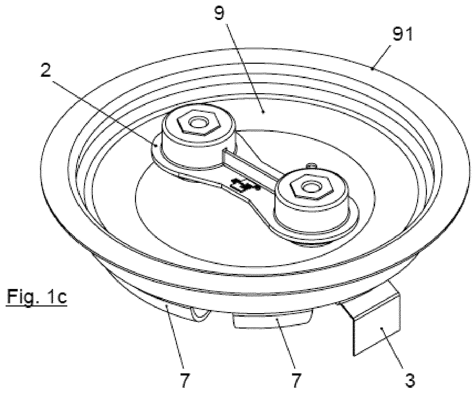

Diese elektrischen Anschlussarmaturen 1 können beispielsweise als Schraubanschluss mit entsprechendem Außengewinde oder Innengewinde realisiert sein, wie in Figur 1b dargestellt.

Die Schraubanschlüsse 1 werden von einem Isolierkörper 2 gehalten.

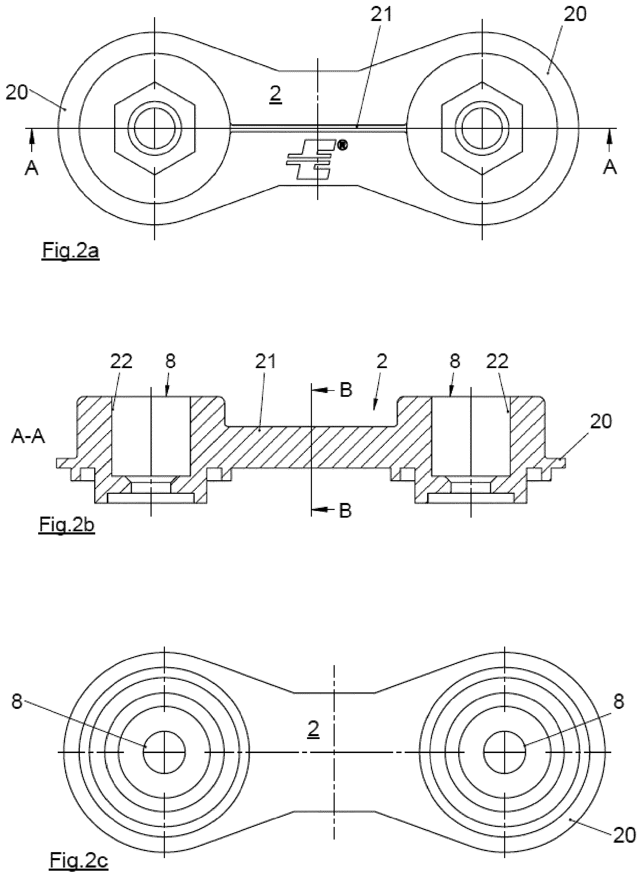

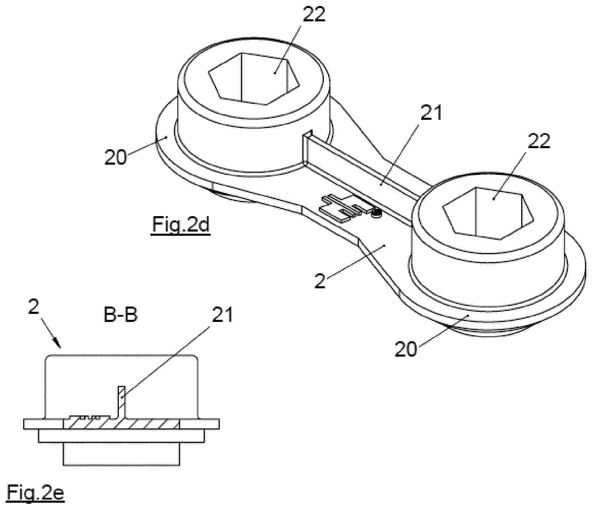

Der Aufbau des Isolierkörpers 2 ist insbesondere in den Figuren 2a-e entnehmbar.

Die Unterseite des Schraubanschlusses 1 kann stoffschlüssig aber auch kraftschlüssig mit einer Schaltschiene 3 jeweils verbunden werden. Zur sicheren Verbindung kann hierbei eine Scheibe 4 zur Anwendung kommen.

Der Deckelverschluss besteht darüber hinaus aus einem tellerförmigen Kunststoffteil 5.

An der Unterseite des Kunststoffteiles 5 ist ein Zentrierstift 6 angeformt.

Dieser Zentrierstift 6 zeigt in Richtung Kondensatorwickel (in den Figuren nicht dargestellt).

Weiterhin sind an der Unterseite des tellerförmigen Kunststoffteiles 5 mehrere, flexible, zungenartige, federelastische Eigenschaften aufweisende bogenförmige Elemente 7 vorhanden.

Aus der Figur 1b wird deutlich, dass diese bogenförmigen Elemente 7 segmentartig ausgebildet sind, und sich vom Rand des tellerförmigen Kunststoffteiles 5 in Richtung Zentrierstift 6 erstrecken.

Im tellerförmigen Kunststoffteil 5 sind weiterhin Ausnehmungen vorhanden, die der Aufnahme des Isolierkörpers 2 dienen.

Der Isolierkörper 2 weist darüber hinaus Durchbrüche 8 für den Schraubanschluss 1 auf.

Die Oberseite des tellerförmigen Kunststoffteiles 5 nimmt einen napfartigen, aus einem verformbaren Material bestehenden Deckel 9 auf.

Dieser Deckel 9 besitzt einen überstehenden Rand 91 zur Ausbildung einer an sich bekannten Bördelverbindung mit der offenen Seite des in den Figuren nicht dargestellten Bechers.

Zwischen dem Deckel 9 und der Anschlussarmatur 1 ist mindestens eine Dichtung 10 aus einem elektrisch isolierenden Material vorhanden.

Der Isolierkörper 2 weist in seiner Draufsicht (siehe Figur 2a bzw. 2d) eine Form auf, die der Gestalt der Zahl "8" angenähert ist.

Das tellerförmige Kunststoffteil 5 nebst den bogenförmigen Elementen 7 oder Zungen besteht aus einem glasfaserverstärktem Kunststoffmaterial.

Das tellerförmige Kunststoffteil 5 weist bei einer bevorzugten Ausführungsform zur Ober- und/oder Unterseite vorspringende, umlaufende Kragen 11 auf.

Der Isolierkörper 2 umgibt zur Bildung ausreichender Luft- und Kriechstrecken weite Teile der Schraubanschlüsse umfangs- und höhenmäßig, wie dies aus der Gesamtschau der Figuren 1b und 2b für den Fachmann nachvollziehbar ist.

Die sich von der Unterseite des tellerförmigen Kunststoffteiles 5 erstreckenden bogenförmigen Elemente 7 sind in Pfeilrichtung gemäß Figur 1b nachgiebig.

Mit der Unterseite gelangen die bogenförmigen Elemente 7 mit der Stirnseite des jeweiligen im Becher befindlichen Wickels in Kontakt und fixieren diesen. Damit ist eine Fixierung eines Wickelpaketes ohne zusätzliche Gehäusesicke, d.h. ohne eine Sicke im Becher möglich.

Wie aus der Figur 1b ersichtlich, sind die im tellerförmigen Kunststoffteil 5 vorhandenen Ausnehmungen geeignet, die in die Ausnehmungen eintauchenden Dichtungen 10 aufzunehmen, wobei ein unterseitiger Rücksprung im Isolierkörper 2 den oberen Bund der entsprechenden Dichtung 10 aufnimmt.

Alternativ kann aber auch der Isolierkörper mit seinem unteren, strukturiertem Ende in eine entsprechende Ausnehmung auf der zugewandten Seite des tellerförmigen Kunststoffteiles 5 eintauchen, wobei diesbezüglich die entsprechenden Durchbrüche innerhalb des verformbaren Deckels 9 in fachgemäßer Weise anzupassen sind. Zur weiteren Verbesserung der Luft- und Kriechstrecken dient der am Isolierkörper 2 vorgesehene jeweilige Kragen 20 sowie der Verbindungssteg 21 an der Oberseite des Isolierkörpers 2.

Um die beim Anziehen des Schraubanschlusses 1 auftretenden Kräfte sicher aufzunehmen und eine Kraftübertragung auf die Verbindungsbereiche zur Schaltschiene 3 weitgehend auszuschließen, ist ein Mittelstück des Schraubanschlusses als Vielkant ausgebildet.

Insofern weist der Isolierkörper 2 jeweils eine komplementäre Vielkantausnehmung 22 auf. Damit ist der Schraubanschluss gegen ein Verdrehen beim Ausüben eines Drehmomentes auf den Gewindebereich des Schraubanschlusses 1 gesichert.

Anstelle eines hervorstehenden Schraubanschlusses 1 besteht die Möglichkeit, alternativ eine Sacklochbohrung mit Innengewinde zum Zweck eines elektrischen Anschlusses zu realisieren.

Bei einer beispielhaften Materialdicke der Zungen bzw. der bogenförmigen Elemente 7 von ca. 1,5 mm ist eine Flexibilität der beispielhaft sechs vorgesehenen Zungen in Form einer Verbiegemöglichkeit am Zungenende von im Wesentlichen 5 mm gewährleistet.

## Patentansprüche

1. Deckelverschluss für in einem Becher anordenbare Wickelkondensatoren mit mindestens einer elektrischen Anschlussarmatur (1), diese ausgebildet als isolierte Deckeldurchführung sowie bestehend aus einem tellerförmigen Kunststoffteil (5), an welchem die Anschlussarmatur (1) befestigt ist,
wobei sich ausgehend vom tellerförmigen Kunststoffteil (5) ein an dessen Unterseite angeformter Zentrierstift (6) in Richtung Kondensatorwickel bzw. Boden des Bechers erstreckt,
**dadurch gekennzeichnet, dass**
die Unterseite des Kunststoffteils (5) mehrere flexible, zungenartige, federelastische Eigenschaften aufweisende bogenförmige Elemente (7) zur toleranzausgleichenden Fixierung des jeweiligen Kondensatorwickels aufweist.

2. Deckelverschluss nach Anspruch 1,
**dadurch gekennzeichnet, dass**
die jeweiligen Zungen bzw. bogenförmigen Elemente (7) segmentartig ausgebildet sind und vom Rand des tellerförmigen Kunststoffteiles (5) in Richtung Zentrierstift (6) verlaufen.

3. Deckelverschluss nach Anspruch 1 oder 2,
**dadurch gekennzeichnet, dass**
im tellerförmigen Kunststoffteil (5) Ausnehmungen vorgesehen sind, welche der Aufnahme von Dichtelementen und/oder eines Isolierkörpers (2) für einen Schraubanschluss (1) dienen.

4. Deckelverschluss nach Anspruch 3,
**dadurch gekennzeichnet, dass**
der Isolierkörper (2) Durchbrüche (8) für den Schraubanschluss (1) aufweist.

5. Deckelverschluss nach Anspruch 4,
**dadurch gekennzeichnet, dass**
der Schraubanschluss (1) an seiner Becherseite mit einem elektrischen bandförmigen Leiter, ausgebildet als Schaltschiene (3) versehen ist.

6. Deckelverschluss nach einem der vorangegangenen Ansprüche,
**dadurch gekennzeichnet, dass**
die Oberseite des tellerförmigen Kunststoffteiles (5) einen napfförmigen, aus einem verformbaren Material bestehenden Deckel (9) trägt, welcher einen überstehenden Rand (91) zur Ausbildung einer Bördelverbindung mit der offenen Seite des Bechers besitzt.

7. Deckelverschluss nach Anspruch 6,
**dadurch gekennzeichnet, dass**
zwischen dem Deckel (9) und der Anschlussarmatur (1) mindestens eine Dichtung (10) vorgesehen ist, welche aus einem elektrisch isolierenden Material besteht.

8. Deckelverschluss nach einem der Ansprüche 3 bis 7,
**dadurch gekennzeichnet, dass**
der Isolierkörper (2) in Draufsicht angenähert die Form der Zahl "8" aufweist.

9. Deckelverschluss nach einem der vorangegangenen Ansprüche,
**dadurch gekennzeichnet, dass**
das tellerförmige Kunststoffteil (5) nebst Zungen bzw. bogenförmigen Elementen (7) aus einem glasfaserverstärkten Kunststoffmaterial besteht.

10. Deckelverschluss nach einem der vorangegangenen Ansprüche,
**dadurch gekennzeichnet, dass**
das tellerförmige Kunststoffteil (5) einen zur Ober- und/oder Unterseite vorspringenden umlaufenden Bund oder Kragen (11) aufweist.

## Claims

1. A lid closure for a wound capacitor that is arrangeable in a can, the lid closure comprising:
at least one electrical connector (1) configured as an insulated conductor that extends through the lid and a disc shaped synthetic material element (5) that supports the electrical connector,
wherein a centering pin (6) arranged at a bottom side of the plate shaped synthetic material element (5) extends towards a winding of the capacitor or towards a base of the can,
**characterized in that** the bottom side of the synthetic material element (5) includes plural flexible tongue shaped spring elastic arcuate elements (7) that fix a capacitor winding and compensate tolerances.

2. The lid closure according to claim 1, **characterized in that** the tongues or arcuate elements (7) are configured segment shaped and extend from an edge of the plate shaped synthetic material element (6) towards the centering pin.

3. The lid closure according to claim 1 or 2, **characterized in that** the plate shaped synthetic material element (5) includes recesses which are configured to receive seal elements and/or an insulation element (2) for a threaded connection (1).

4. The lid closure according to claim 3, **characterized in that** the insulation element (2) includes pass through openings (8) for the threaded connection (1).

5. The lid closure according to claim 4, **characterized in that** the threaded connection (1) is provided with a band shaped electrical conductor at its can side, wherein the band shaped electrical conductor is configured as a connecting rail (3).

6. The lid closure according to one of the preceding claims, **characterized in that** a top side of the plate shaped synthetic material element (5) is provided with a disc shaped cover (9) that is made from a deformable material and that includes a protruding edge (91) configured to form a fold over connection with an open side of the can.

7. The lid closure according to claim 6, **characterized in that** at least one seal (10) is provided between the lid (9) and the electrical connector (1) wherein the at least one seal is made from an electrical insulating material.

8. The lid closure according to one of the claims 3 - 7, **characterized in that** the insulating element (2) is shaped like a number "8" in top view.

9. The lid closure according to one of the preceding claims, **characterized in that** the plate shaped synthetic material element (5) including the tongues or arcuate elements (7) is made from a glass fiber reinforced synthetic material.

10. The lid closure according to one of the preceding claims, **characterized in that** the plate shaped synthetic material element (5) includes a circumferential flange or collar (11) that protrudes towards a top side and/or a bottom side.

## Revendications

1. Fermeture de couvercle pour des condensateurs bobinés à agencer dans un godet, comprenant au moins une armature de connexion électrique (1), celle-ci étant réalisée sous forme de traversée de couvercle isolée et étant constituée d'une partie en matière plastique en forme de plateau (5), sur laquelle est fixée l'armature de connexion (1),
dans laquelle
une tige de centrage (6) conformée sur la face inférieure de la partie en matière plastique en forme de plateau (5) s'étend en partant de celle-ci en direction du bobinage de condensateur ou respectivement du fond du godet,
**caractérisée en ce que**
la face inférieure de la partie en matière plastique (5) comprend plusieurs éléments flexibles de forme arquée semblable à des languettes (7), présentant des propriétés élastiques analogues à celle d'un ressort, destinées à la fixation du bobinage de condensateurs respectifs avec compensation des tolérances.

2. Fermeture de couvercle selon la revendication 1,
**caractérisée en ce que**
les languettes respectives ou les éléments respectifs de forme arquée (7) sont réalisé(e)s à la manière de segments et s'étendent depuis la bordure de la partie en matière plastique en forme de plateau (5) en direction de la tige de centrage (6).

3. Fermeture de couvercle selon la revendication 1 ou 2,
**caractérisée en ce qu'**il est prévu des évidements dans la partie en matière plastique en forme de plateau (5), évidements qui servent à la réception d'éléments d'étanchement et/ou d'un corps isolant (2) pour un raccord vissé (1).

4. Fermeture de couvercle selon la revendication 3,
**caractérisée en ce que** le corps isolant (2) comporte des traversées (8) pour le raccord vissé (1).

5. Fermeture de couvercle selon la revendication 4,
**caractérisée en ce que** le raccord vissé (1) est doté, sur son côté vers le côté, d'un conducteur électrique en forme de ruban, réalisé sous forme de rail de commutation (3).

6. Fermeture de couvercle selon l'une des revendications précédentes,
**caractérisée en ce que** la face supérieure de la partie en matière plastique en forme de plateau (5) porte un couvercle en forme de cuvette (9), constitué d'un matériau déformable, qui possède une bordure en dépassement (91) pour la réalisation d'une liaison par bordage avec le côté ouvert du côté.

7. Fermeture de couvercle selon la revendication 6,
**caractérisée en ce qu'**il est prévu au moins un joint (10) entre le couvercle (9) et l'armature de connexion (1), joint qui est constitué en un matériau électriquement isolant.

8. Fermeture de couvercle selon l'une des revendications 3 7,
**caractérisée en ce que** le corps isolant (2) présente en vue de dessus approximativement la forme du chiffre "8".

9. Fermeture de couvercle selon l'une des revendications précédentes,
**caractérisée en ce que** la partie en matière plastique en forme de plateau (5) est constituée, outre les languettes ou élément de forme arquée (7), en une matière plastique renforcée par des fibres de verre.

10. Fermeture de couvercle selon l'une des revendications précédentes,
**caractérisée en ce que** la partie en matière plastique en forme de plateau (5) comporte un bourrelet ou une collerette (11) périphérique en saillie vers la face supérieure et/ou vers la face inférieure.
